# EUROPÄISCHE PATENTANMELDUNG

(11) **EP 4 345 560 A1**
(43) Veröffentlichungstag der Anmeldung: **03.04.2024**
(21) Anmeldenummer: 22198796.9
(22) Anmeldetag: 29.09.2022
(51) Int. Cl.: G05B 19/42, G05B 19/4099, B29C 64/00, B22F 10/80, B23K 9/04, B25J 9/16, B29C 64/386, B33Y 10/00, B33Y 30/00, B33Y 50/00

(54) **VERFAHREN UND VORRICHTUNG ZUM BESTIMMEN EINES ADDITIVEN HERSTELL-PROZESSES EINES BAUTEILS SOWIE ADDITIVER HERSTELL-PROZESS DES BAUTEILS**

(71) Anmelder: Siemens Aktiengesellschaft, 80333 München (DE)
(72) Erfinder: Kamps, Tobias, 80538 München (DE)
(74) Vertreter: Siemens Patent Attorneys

(57) **Zusammenfassung**

Die Erfindung betrifft ein Verfahren und eine Vorrichtung zum Bestimmen eines additiven Herstell-Prozesses zum additiven Herstellen eines Bauteils, bei dem im additiven Herstell-Prozess mindestens eine Herstell-Station durchlaufen wird, in der ein Prozessieren mindestens eines Vorprodukts des Bauteils mit Hilfe mindestens einer Prozessier-Maschine durchgeführt wird. Dabei wird zum Bestimmen des additiven Herstell-Prozesses ein Maschinen-Anlern-Werkzeug zum Anlernen der Prozessier-Maschine für das Prozessieren des Vorprodukts verwendet. Für das Maschinen-Anlern-Werkzeug wird eine Übersetzungs-Hilfe zum Übersetzen einer analogen Bewegung der Prozessier-Maschine für das Prozessieren des Vorprodukts in digitale Bewegungs-Daten der Prozessier-Maschine verwendet. Die Prozessier-Maschine ist vorzugsweise ein Prozessier-Roboter. Das Maschinen-Anlern-Werkzeug (Roboter-Anlern-Werkzeug) ist vorzugsweise ein "Trace-Pen". Darüber hinaus wird ein additiver Herstell-Prozess zum additiven Herstellen eines Bauteils mit folgenden Verfahrensschritten: a) Bestimmen eines Herstell-Prozesses und b) Additives Herstellen des Bauteils.

## Beschreibung

Die Erfindung betrifft ein Verfahren zum Bestimmen eines additiven Herstell-Prozesses eines Bauteils. Daneben wird eine Vorrichtung zum Durchführen des Verfahrens sowie ein additiver Herstell-Prozess zum additiven Herstellen eines Bauteils angegeben.

Ein additives Herstell-Verfahren ist beispielsweise ein 3d-Druck-Verfahren wie DED (Direct Energy Deposition). In DED-Verfahren der additiven Fertigung (AM, additive manufacturing) wie WAAM (Wire Arc Additive Manufacturing), LMD (Laser Metal Deposition) oder Materialextrusion findet derzeit eine extensive Prozess-Kette Anwendung, um vom CAD (Computer Aided Design, Rechner gestütztes Konstruieren) des Herstell-Prozesses bis hin zur eigentlichen Fertigung zu gelangen (CAM, Computer Aided Manufacturing).

Ausgehend von einem CAD wird eine Segmentierung des Herstell-Prozesses meist händisch vorgenommen. Dabei wird der Herstell-Prozess in mehrere Herstell-Stationen (Segmente) unterteilt. Für die Herstell-Stationen werden anschließend Prozess-Pfade geplant. Diese Prozess-Pfade werden dann zusammengefügt und an eine Maschinen-Simulation übergeben, um die korrespondierenden Bewegungen von Maschinen des Herstell-Prozesses zu prüfen und gegebenenfalls anzupassen. So können beispielsweise Kollisionen der eingesetzten Maschinen vermieden werden.

In solchen Herstell-Stationen werden oftmals Prozessier-Maschinen in Form von Prozessier-Robotern zum Prozessieren (z.B. Bearbeiten) eines Vor-Produkts des Bauteils eingesetzt. Für einen solchen Prozessier-Roboter werden im Rahmen des CAM Roboter-Regeln (Robotic Rules) angegeben, um eine Bewegung des Prozessier-Roboters zu konfigurieren.

Die Roboter-Regeln werden dann mit Hilfe eines Post-Processors in einen G-Code umgewandelt, der dann wieder an den Prozessier-Roboter übergeben wird.

Bei einem segmentierten Herstell-Prozess ist es wichtig, dass Übergabe-Punkte (z.B. Null-Punkte, Übergabe-Stationen, Referenzpunkte und -kanten) zwischen aufeinander folgenden Herstell-Stationen zueinander und zu Vorprodukten bzw. zum herzustellenden Bauteil passen.

Bei einer Änderung des Bauteils oder einer Änderung eines Vorprodukts des Bauteils muss möglicherwiese die gesamte Prozess-Kette (zumindest Planung und Realisierung des Herstell-Prozesses, z.B. in einem CAD/CAM-System) erneut durchlaufen werden. Meistens wird noch ein "Trockenlauf" angeschlossen, um Kollisionen der Maschine auf Basis des neuen Maschinencodes zu vermeiden. Dies kann sehr aufwändig sein.

Aufgabe der vorliegenden Erfindung ist es, aufzuzeigen, wie das additive Herstellen eines Bauteils auf einfache Weise geändert werden kann.

Zur Lösung der Aufgabe wird ein Verfahren zum Bestimmen eines additiven Herstell-Prozesses zum additiven Herstellen eines Bauteils angegeben, bei dem im additiven Herstell-Prozess mindestens eine Herstell-Station durchlaufen wird, in der ein Prozessieren mindestens eines Vorprodukts des Bauteils mit Hilfe mindestens einer Prozessier-Maschine durchgeführt wird. Dabei wird zum Bestimmen des additiven Herstell-Prozesses ein Maschinen-Anlern-Werkzeug zum Anlernen der Prozessier-Maschine für das Prozessieren des Vorprodukts verwendet. Für das Maschinen-Anlern-Werkzeug wird eine Übersetzungs-Hilfe zum Übersetzen einer analogen Bewegung der Prozessier-Maschine für das Prozessieren des Vorprodukts in digitale Bewegungs-Daten der Prozessier-Maschine verwendet.

Zur Lösung der Aufgabe wird zudem eine Vorrichtung zum Durchführen des Verfahrens zum Bestimmen eines additiven Herstell-Prozesses mit mindestens einem Maschinen-Anlern-Werkzeug zum Anlernen der Prozessier-Maschine für das Prozessieren des Vorprodukts des Bauteils angegeben.

Darüber hinaus wird zur Lösung der Aufgabe der Erfindung ein additiver Herstell-Prozess zum additiven Herstellen eines Bauteils mit folgenden Verfahrensschritten: a) Bestimmen eines Herstell-Prozesses und b) Additives Herstellen des Bauteils.

Als Prozessier-Maschine wird beispielsweise eine Bearbeitungsmaschine in Form einer klassischen Multi-Achs-Gantry-Maschine verwendet.

In einer besonderen Ausgestaltung werden als Prozessier-Maschine ein Prozessier-Roboter und als Maschinen-Anlern-Werkzeug ein Roboter-Anlern-Werkzeug verwendet.

Der additive Herstell-Prozess kann auch Prozess-Schritte umfassen, über die Material oder Teile eines Vorprodukts des Bauteils entfernt werden. In einer besonderen Ausgestaltung umfasst daher der additive Herstell-Prozess mindestens einen subtraktiven Herstell-Schritt.

Insbesondere wird das Bauteil auf einer Substratplatte hergestellt. Dabei können das Bauteil und die Substrat-Platte lösbar oder fest miteinander verbunden werden.

Der Herstell-Prozess (Herstell-Verfahren) ist ein Fertigungs-Prozess (Fertigungs-Verfahren) zum additiven Fertigen eines beliebigen Bauteils. Der Herstell-Prozess ist beispielsweise ein eingangs angegebenes 3d-Druck-Verfahren.

Das Vorprodukt umfasst beispielsweise ein Material oder ein Halbzeug des Bauteils.

Mit dem Bestimmen des Herstell-Prozesses findet ein Konzipieren des Herstell-Prozesses statt. Dies umfasst eine Auslegung, eine Planung und basierend auf der Planung dann eine Realisierung des Herstell-Prozesses.

Mit der Erfindung ist ein modularer Aufbau des Herstell-Prozesses möglich. Dabei kann jeder der einzelnen Herstell-Prozesse für sich verändert und optimiert werden.

Gemäß einer besonderen Ausgestaltung wird eine Prozessier-Station verwendet, die mindestens einen parametrisierbaren Prozessier-Pfad umfasst, entlang dem das Prozessieren des Vorprodukts durchgeführt wird.

Vorzugsweise wird als Maschinen-Anlern-Werkzeug ein Maschinen-Anlern-Stift verwendet. Der Maschinen-Anlern-Stift ist ein sogenannter "Trace-Pen". Dieser kann durch einen Menschen verwendet werden, um Punkte, Bewegungen oder Orientierungen mittels einer drahtlosen Erfassung anhand der durchgeführten Bewegungen des Stifts in maschinenlesbare Koordinaten übersetzt werden. Dazu wird der Stift bei der Bewegung und Benutzung im Raum überwacht.

Der Herstell-Prozess kann grundlegend neu konzipiert werden. In einer besonderen Ausgestaltung wird der additive Herstell-Prozess auf der Grundlage eines bereits bestehenden additiven Herstell-Prozesses bestimmt. Ein neuer Herstell-Prozess wird auf der Grundlage eines bereits bestehenden Herstell-Prozesses bestimmt.

Das Herstell-Verfahren wird vorzugsweise Rechner gestützt mit mindestens einer lokalisierten und/oder mindesten einer verteilten Rechner-Einheit durchgeführt. Die lokale Rechner-Einheit umfasst beispielsweise eine sog. Edge-Lösung. Im Gegenzug dazu basiert die verteilte Rechner-Einheit beispielsweise auf einer Cloud-Lösung.

In einer besonderen Ausgestaltung wird die analoge Bewegung der Prozessier-Maschine mittels Muster-Erkennung erfasst. Hiermit wird ein sog. Pattern-Recognition-Ansatz verfolgt. Daraus werden die vom Menschen geplanten und skizzierten Pfade erkannt, interpretiert bzw. extrapoliert/intrapoliert und somit in der CAM-Planung verwendbar gemacht.

Insbesondere wird eine Maschinen-Simulation des additiven Herstell-Prozesses durchgeführt. Auf der Grundlage der Maschinen-Simulation wird der additive Herstell-Prozess bestimmt. Mit der Maschinen-Simulation wird überprüft, ob der bestimmte additive Herstellungs-Prozess in die Realität umgesetzt werden kann.

Die Erfindung kann insbesondere für einen Herstellungs-Prozess eingesetzt werden, der modular aus mehreren Prozessier-Stationen aufgebaut ist. Gemäß einer besonderen Ausgestaltung wird daher ein additiver Herstell-Prozess verwendet, bei dem in einer Prozessier-Kette des additiven Herstell-Prozesses die Prozessier-Station und mindestens eine weitere Prozessier-Station derart miteinander verknüpft werden, dass ein prozessiertes Vorprodukt in einem Übergabe-Bereich von der Prozessier-Station auf die weitere Prozessier-Station übergeben werden kann. Der Übergabe-Bereich ist ein Bereich, in dem sich die Prozessier-Station und die in der Prozessier-Kette nachfolgenden weiteren Prozessier-Station überlappen Die sich überlappenden Prozessier-Stationen zeichnet sich durch fest vorgegebene Übergabe-Punkte aus, an denen das Vorprodukt von er Prozessier-Station in die nachfolgende Prozessier-Station gelangt. Vorzugsweise ändern sich diese Übergabepunkte nicht. Somit kann jeder der Prozessier-Stationen der Prozessier-Kette für sich und unabhängig von anderen Prozessier-Stationen geändert werden, so lange sichergestellt ist, dass ein gewünschtes Vorprodukt an einem solchen Übergabe-Punkt (Null-Punkt) auf die darauffolgende Prozessier-Station übergeben werden kann.

Zusammenfassend sind mit der Erfindung folgende verbunden:
Ein additives Herstell-Verfahren kann aufwandsarm bestimmt und geändert werden. In herkömmlichen additiven Herstell-Prozessen ist eine Änderung des additiven Herstellungs-Prozesses aufwändig, da das zugrundeliegende Bauteil meist nicht vermessen ist. Somit sind Null-Punkte der Prozess-Kette des additiven Herstell-Prozesses oftmals unbekannt. In Folge davon muss die Prozess-Kette meist mehrmals durchlaufen werden, um passende Prozessier-Pfade zu generieren. Dies führt zu einem großen Aufwand im CAD/CAM-Bereich, was den Vorteil der AM-Technologie, nämlich die Fertigung kleiner Stückzahlen, zunehmend schwierig macht. Gerade dies kann mit der vorliegenden Erfindung und insbesondere mit dem Einsatz eines Roboter-Anlern-Stifts umgangen werden.

Anhand eines Ausführungsbeispiels und der dazu gehörenden, schematischen Figur wird die Erfindung näher beschrieben.

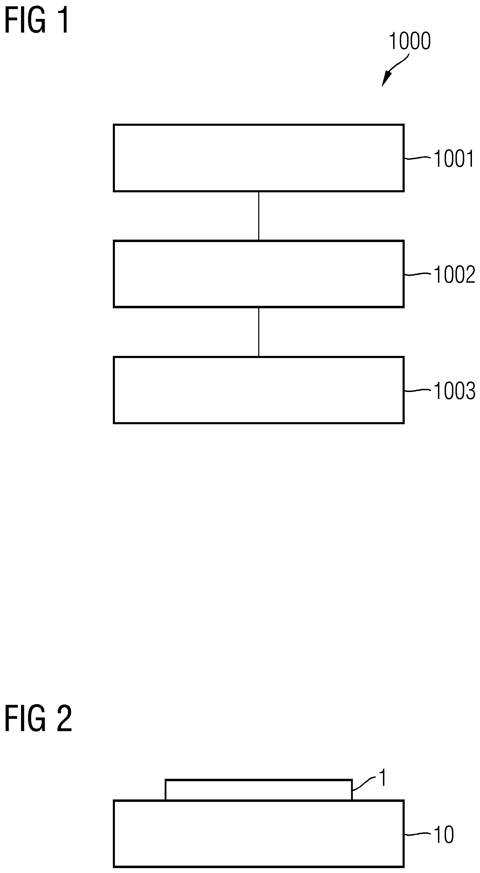

Figur 1 zeigt ein Verfahren zum Bestimmen eines additiven Herstell-Prozesses eines Bauteils.
Figur 2 zeigt ein Bauteil auf einer Substrat-Platte.

Gemäß dem Verfahren besteht das Bestimmen des additiven Herstellungs-Prozesses 1000 aus der Planung 1001 des additiven Herstell-Prozesses, der Maschinen-Simulation 1002 des Herstell-Prozesses und der Realisierung 1003 des Herstell-Prozesses.

Bei dem additiven Herstell-Prozess (Fertigungs-Prozess) werden in einer Prozessier-Kette eine Prozessier-Station und mindestens eine weitere Prozessier-Station derart miteinander verknüpft, dass ein prozessiertes Vorprodukt des Bauteils 1 in einem Übergabe-Bereich von der Prozessier-Station auf die weitere Prozessier-Station übergeben werden kann.

In den Prozessier-Stationen wird ein Prozessieren von Vorprodukten des Bauteils durchgeführt. In mindestens einer der Prozessier-Stationen findet das entsprechende Prozessieren des Vorprodukts mit Hilfe mindestens einer Prozessier-Maschine (in Form eines Prozessier-Roboters) entlang eines parametrisierbaren Prozessier-Pfads statt.

Zum Bestimmen des additiven Herstell-Prozesses wird also ein Roboter-Anlern-Werkzeug zum Anlernen des Prozessier-Roboters für das Prozessieren des Vorprodukts verwendet. Für das Roboter-Anlern-Werkzeug wird eine Übersetzungs-Hilfe zum Übersetzen einer analogen Bewegung des Prozessier-Roboters für das Prozessieren des Vorprodukts in digitale Bewegungs-Daten des Prozessier-Roboters verwendet.

Als Roboter-Anlern-Werkzeug (Maschinen-Anlern-Werkzeug) wird ein Roboter-Anlern-Stift (Maschinen-Anlernstift, "Trace-Pen") verwendet. Ein Operateur führt eine Bewegung des "Trace Pens" aus. Die Bewegung des "Trace-Pens" wird in digitale Daten (z.B. Punkte, Linien, Orientierungen, Pfadmuster wie Schraffur oder Spirale) übersetzt.

Mit dem Beispiel wird ein Ansatz verfolgt, nach dem eine Neuteil-Fertigung des Bauteils 1 auf einer Substrat-Platte 10 über eine maschinennahe CAD/CAM-Planung realisiert wird. Dies verkürzt die gesamte Prozess-Kette drastisch und macht die Technologie auch für kleine Stückzahlen und spontane Aufbauten sinnvoll. Der "Trace-Pen" liest die analogen Bewegungen eines Operators bzw. des Herstell-Roboters und übersetzt diese mit der Übersetzungs-Hilfe in einen sinnvollen Prozessier-Pfad, z.B. über Pattern-Recognition (Muster-Erkennungs-Ansätze. Ein Benutzer kann im "Trace-Pen"-System auf einem Computer-Tablett den Prozessier-Pfad validieren, ggf. anpassen und Abstände/Dimensionierung eingeben, um den Prozessier-Pfad parametrierbar zu erstellen. Dieser wird visualisiert, um dem Nutzer eine Möglichkeit zu geben, Anpassungen vorzunehmen.

Danach wird der Prozessier-Pfad auf ein CAD/CAM-System übertragen. Dieses wird als Instanz einer lokalisierten Rechner-Einheit betrieben (z.B. einer lokalen Instanz des CAD/CAM-Systems in Kombination mit einer Maschinensimulation). Dort werden die Prozessier-Pfade an ein Maschinen-Modell übergeben, eine Maschinen-Simulation durchgeführt, ggf. vorgegeben "Robotic Rules" oder Maschinenbewegungseigenschaften appliziert, die Maschinen-Bewegung inkl. Steuerung in einem Maschinensimulationsprogramm-Programm abgebildet. Somit kann durch den Nutzer der geplante Prozessier-Pfad kurz validiert werden. Sobald der Prozessier-Pfad freigegeben ist, wird ein G-Code an eine Herstell-Maschine übergeben, an der der Herstell-Prozess des Bauteils 1 durchgeführt wird. Somit kann eine CAD/CAM-Planung direkt an der Herstell-Maschine intuitiv durchgeführt werden.

In einem alternativen Beispiel wird der Herstell-Prozess nicht für eine Neuteil-Fertigung bestimmt. Der additive Herstell-Prozess auf der Grundlage eines bereits bestehenden additiven Herstell-Prozesses bestimmt.

## Patentansprüche

1. Verfahren (1000) zum Bestimmen eines additiven Herstell-Prozesses zum additiven Herstellen eines Bauteils (1), bei dem
- im additiven Herstell-Prozess mindestens eine Herstell-Station durchlaufen wird, in der ein Prozessieren mindestens eines Vorprodukts des Bauteils (1) mit Hilfe mindestens einer Prozessier-Maschine durchgeführt wird, wobei
- zum Bestimmen des additiven Herstell-Prozesses ein Maschinen-Anlern-Werkzeug zum Anlernen der Prozessier-Maschine für das Prozessieren des Vorprodukts verwendet und
- für das Maschinen-Anlern-Werkzeug eine Übersetzungs-Hilfe zum Übersetzen einer analogen Bewegung der Prozessier-Maschine für das Prozessieren des Vorprodukts in digitale Bewegungs-Daten der Prozessier-Maschine verwendet wird.

2. Verfahren nach Anspruch 1, wobei als Prozessier-Maschine ein Prozessier-Roboter und als Maschinen-Anlern-Werkzeug ein Roboter-Anlern-Werkzeug verwendet werden.

3. Verfahren nach Anspruch 1 oder 2, wobei eine Prozessier-Station verwendet wird, die mindestens einen parametrisierbaren Prozessier-Pfad umfasst, entlang dem das Prozessieren des Vorprodukts durchgeführt wird.

4. Verfahren nach einem der Ansprüche 1 bis 3, wobei als Maschinen-Anlern-Werkzeug ein Maschinen-Anlern-Stift verwendet wird.

5. Verfahren nach einem der Ansprüche 1 bis 4, wobei der additive Herstell-Prozess auf der Grundlage eines bereits bestehenden additiven Herstell-Prozesses bestimmt wird.

6. Verfahren nach einem der Ansprüche 1 bis 5, wobei das Herstell-Verfahren vorzugsweise Rechner gestützt wird mit mindestens einer lokalisierten und/oder mindestens einer verteilten Rechner-Einheit.

7. Verfahren nach einem der Ansprüche 1 bis 6, wobei die analoge Bewegung der Prozessier-Maschine mittels Muster-Erkennung erfasst wird.

8. Verfahren nach einem der Ansprüche 1 bis 7, wobei eine Maschinen-Simulation des additiven Herstell-Prozesses durchgeführt wird und der additive Herstell-Prozess auf der Grundlage der Maschinen-Simulation bestimmt wird.

9. Verfahren nach einem der Ansprüche 1 bis 7, wobei ein additiver Herstell-Prozess verwendet wird, bei dem in einer Prozessier-Kette des additiven Herstell-Prozesses die Prozessier-Station und mindestens eine weitere Prozessier-Station derart miteinander verknüpft werden, dass ein prozessiertes Vorprodukt in einem Übergabe-Bereich von der Prozessier-Station auf die weitere Prozessier-Station übergeben werden kann.

10. Vorrichtung zum Durchführen des Verfahrens zum Bestimmen eines additiven Herstell-Prozesses nach einem der Ansprüche 1 bis 9 mit mindestens einem Maschinen-Anlern-Werkzeug zum Anlernen der Prozessier-Maschine für das Prozessieren des Vorprodukts des Bauteils.

11. Additiver Herstell-Prozess zum additiven Herstellen eines Bauteils (1) mit folgenden Verfahrensschritten:
a) Bestimmen eines Herstell-Prozesses nach einem der Ansprüche 1 bis 9 und
b) Additives Herstellen des Bauteils.

12. Additiver Herstell-Prozess nach einem der Ansprüche 11, bei dem zumindest ein subtraktiver Herstell-Schritt verwendet wird.

13. Additiver Herstell-Prozess nach Anspruch 11 oder 12, wobei das Bauteil (1) auf einer Substrat-Platte (10) hergestellt wird.
